# EUROPÄISCHE PATENTSCHRIFT

(11) **EP 3 841 318 B1**
(45) Veröffentlichungstag und Bekanntmachung des Hinweises auf die Patenterteilung: **15.06.2022**
(21) Anmeldenummer: 19759328.8
(22) Anmeldetag: 21.08.2019
(51) Int. Cl.: F16H 59/62, F16H 59/64, F16H 61/02

(54) **VERFAHREN ZUM BETRIEB EINES ANTRIEBSSTRANGS**
METHOD FOR OPERATING A DRIVE TRAIN
PROCÉDÉ POUR FAIRE FONCTIONNER UNE CHAÎNE CINÉMATIQUE

(30) Priorität: 23.08.2018 DE 102018214243
(43) Veröffentlichungstag der Anmeldung: 30.06.2021
(73) Patentinhaber: VOLKSWAGEN AKTIENGESELLSCHAFT, 38440 Wolfsburg (DE)
(72) Erfinder: JUNGNICKEL, Christian, 38551 Ribbesbüttel (DE); LEISE, Marcel, 38461 Danndorf (DE); SCHAEFER, Stephan, 38458 Velpke (DE)
(86) Internationale Anmeldenummer: PCT/EP2019/072374
(87) Internationale Veröffentlichungsnummer: WO 2020/038999

(56) Entgegenhaltungen:
- EP-A1- 2 050 989
- DE-A1- 4 329 978
- DE-A1- 19 951 107
- DE-A1-102013 020 079
- US-A1- 2017 355 374

## Beschreibung

Die Erfindung betrifft ein Verfahren zum Betrieb eines Antriebsstrangs in einem Kraftfahrzeug. Der Antriebsstrang weist insbesondere eine Verbrennungskraftmaschine und bevorzugt zusätzlich eine elektrische Maschine auf. Insbesondere ist das Verfahren zum Betrieb eines Hybrid-Antriebsstrangs geeignet, in dem eine Verbrennungskraftmaschine mit zumindest einer elektrischen Maschine zum Antrieb des Kraftfahrzeuges kombiniert wird.

Es ist bekannt, dass gerade eine Verbrennungskraftmaschine bei einer bestimmten Drehzahl ein erstes Drehmoment bereitstellt, das in Abhängigkeit von klimatischen bzw. geographischen Bedingungen veränderlich ist. Z. B. kann das bereitstellbare erste Drehmoment bei höheren Lufttemperaturen der Umgebung gegenüber einem Referenzzustand (z. B. 1 bar Umgebungsdruck und 20 Grad Celsius Lufttemperatur) der Verbrennungskraftmaschine reduziert sein. Weiter kann das bereitstellbare erste Drehmoment bei geringerem Luftdruck gegenüber dem Referenzzustand reduziert sein.

Getriebesteuereinheiten, die zur Betätigung eines selbstschaltenden Getriebes (also nicht ausschließlich durch den Fahrer betätigbar) geeignet ausgeführt sind, berücksichtigen im Allgemeinen ausschließlich die Eigenschaften einer Verbrennungskraftmaschine, die in dem Referenzzustand erzeugbar sind.

Wird das Kraftfahrzeug allerdings in anderen Betriebszuständen als dem Referenzzustand betrieben (z. B. also in größerer Höhe und/oder bei höheren Umgebungstemperaturen), kann es dazu kommen, dass das Getriebe einen Schaltvorgang durchführt, wobei z. B. bei konstanter Raddrehzahl aber sich infolge des Schaltvorgangs veränderter Drehzahl der Verbrennungskraftmaschine ein nur reduziertes erstes Drehmoment (reduziert gegenüber einem für den Referenzzustand erwartbaren ersten Drehmoments) bereitgestellt werden kann. Das kann einerseits dazu führen, dass dem Fahrer des Kraftfahrzeugs das Gefühl vermittelt wird in ein Momentenloch zu fallen und dass andererseits sogenannte Pendelschaltungen (hin- und herschalten des Getriebes zwischen verschiedenen Getriebeübersetzungen) hervorgerufen werden.

Die DE 199 51 107 A1 betrifft eine Steuerung eines Automatikgetriebes eines Kraftfahrzeuges. Mit der Steuerung sollen Pendelschaltungen aufgrund einer Motormomentenreduzierung infolge von fahrzeugexternen Faktoren wie Luftdruck und Außentemperatur vermieden werden.

Die DE 43 29 978 A1 ist auf ein Verfahren zur Betätigung eines selbständig schaltenden Getriebes gerichtet. Dabei sollen u. a. Parameter wie Umgebungsluftdruck und Temperatur der Ansaugluft berücksichtigt werden.

Die EP 2 050 989 A1 ist auf ein Schaltinformationssystem gerichtet, durch das ein Schaltpunkt für ein Getriebe angezeigt wird.

Aufgabe der vorliegenden Erfindung ist es, die mit Bezug auf den Stand der Technik angeführten Probleme zumindest teilweise zu lösen. Insbesondere soll ein Verfahren vorgeschlagen werden, durch das eine verbesserte Steuerung einer Getriebebetätigung ermöglicht wird.

Zur Lösung dieser Aufgaben trägt ein Verfahren mit den Merkmalen gemäß Patentanspruch 1 und ein Kraftfahrzeug mit den Merkmalen gemäß Patentanspruch 9 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Gemäß der vorliegenden Erfindung wird ein Verfahren zum Betrieb eines Antriebsstrangs in einem Kraftfahrzeug vorgeschlagen, wobei der Antriebsstrang zumindest eine Verbrennungskraftmaschine als eine erste Antriebseinheit und ein selbstschaltendes Getriebe aufweist. Die erste Antriebseinheit wird über eine erste Steuereinheit und das Getriebe über eine Getriebesteuereinheit gesteuert. Das Getriebe wird in Abhängigkeit von (unter anderem) zumindest einer Drehzahl der ersten Antriebseinheit und einem von der ersten Antriebseinheit bereitstellbaren ersten Drehmoment betätigt. Das Getriebe wird zusätzlich in Abhängigkeit von einem in einer Umgebung des Kraftfahrzeugs vorliegendem Luftdruck und einer in der Umgebung vorliegenden Lufttemperatur betätigt, wenn diese Parameter von einem Referenzzustand für den Luftdruck und die Lufttemperatur abweichen. Der Referenzzustand umfasst feste Werte für Umgebungsdruck und Lufttemperatur, z. B. 1 bar Umgebungsdruck und 20 Grad Celsius Lufttemperatur. Die Umgebung beschreibt insbesondere den das Kraftfahrzeug umgebenden Raum, dessen Eigenschaften insbesondere nicht vom Kraftfahrzeug selber beeinflusst sind.

Das Getriebe wird von einer Getriebesteuereinheit gesteuert, d. h. über die Getriebesteuereinheit werden Schaltungen, also Wechsel der im Getriebe eingestellten Übersetzung, eingeleitet und durchgeführt. Durch die Schaltung wird ein Verhältnis einer Drehzahl zwischen einer Antriebswelle und einer Abtriebswelle (durch das Getriebe drehmomentübertragend verbunden) verändert.

Es wird also insbesondere vorgeschlagen, das Getriebe in Abhängigkeit von zumindest einer (sich infolge eines Schaltvorgangs einstellenden) Drehzahl der ersten Antriebseinheit und einem von der ersten Antriebseinheit (bei dieser sich einstellenden Drehzahl) bereitstellbaren ersten Drehmoment zu betätigen.

Die Verbrennungskraftmaschine wird über eine erste Steuereinheit gesteuert. Die erste Steuereinheit steuert den Betrieb der Verbrennungskraftmaschine (Zündzeitpunkte, Mischungsverhältnis, Verdichtung, Kraftstoffmenge, Abgasrückführung, etc.).

Getriebesteuereinheit und erste Steuereinheit kommunizieren miteinander, so dass z. B. Schaltpunkte des Getriebes auch in Abhängigkeit von Eigenschaften der Verbrennungskraftmaschine bestimmt werden können.

Vorsorglich soll darauf hingewiesen sein, dass das vorgeschlagene Verfahren (indirekt) mit einer Drehzahl-Regelgröße durchgeführt werden kann, ohne dass explizit die Drehzahl überwacht oder analysiert wird. Es ist vielmehr auch mit umfasst, dass ein für die Drehzahl charakteristischer bzw. äquivalenter Parameter überwacht bzw. damit geregelt wird. Beispielhaft sei hier der Parameter der (relativen) Füllung der Brennräume mit Kraftstoff-Luft-Gemisch angeführt, der zur Bestimmung bzw. Berechnung des (resultierenden) Drehmoments dienen und herangezogen werden kann. Der Ausdruck "Drehzahl" umfasst daher in diesem Zusammenhang auch einen die Drehzahl (mit) bestimmenden Parameter und/oder einen von der Drehzahl (eindeutig) abhängigen Parameter.

Das Verfahren ermöglicht insbesondere, dass die Getriebesteuereinheit z. B. darüber informiert werden kann, wie hoch nach einem (noch durchzuführenden) Schaltvorgang das erste Drehmoment der Verbrennungskraftmaschine ausfallen bzw. bereitgestellt werden kann (nämlich in Abhängigkeit von Lufttemperatur und/oder Luftdruck). Die Getriebesteuereinheit kann diese Information zur Bestimmung eines Schaltpunkts verwerten.

Dabei wird insbesondere berücksichtigt, wie hoch das erste Drehmoment bei der sich infolge der Änderung der Übersetzung ändernden Drehzahl der Verbrennungskraftmaschine ausfallen bzw. bereitgestellt werden kann.

Insbesondere kann durch das vorgeschlagene Verfahren ein (bei infolge des Schaltvorgangs veränderter Drehzahl der ersten Antriebseinheit) bereitstellbares erstes Drehmoment prognostiziert werden, so dass in Abhängigkeit von diesem prognostizierten ersten Drehmoment bestimmt werden kann, ob und wenn ja, was für ein Schaltvorgang (also Wechsel zu welcher Übersetzung) tatsächlich durchgeführt werden sollte.

Insbesondere ist in zumindest einer der Steuereinheiten (bevorzugt in der ersten Steuereinheit) mindestens ein Modell hinterlegt, aus dem in Abhängigkeit von einer Drehzahl der ersten Antriebseinheit und unter Berücksichtigung von zumindest dem Luftdruck oder der Lufttemperatur (bevorzugt von beiden) ein unter diesen Bedingungen durch die erste Antriebseinheit bereitstellbares erstes Drehmoment hervorgeht. Zur Betätigung des Getriebes wird das mindestens eine Modell berücksichtigt.

Bevorzugt sind zumindest zwei Modelle hinterlegt, wobei aus dem einen Modell ein in Abhängigkeit von einer Drehzahl der ersten Antriebseinheit und unter Berücksichtigung von zumindest dem Luftdruck unter diesen Bedingungen durch die erste Antriebseinheit bereitstellbares erstes Drehmoment hervorgeht und aus dem anderen Modell ein in Abhängigkeit von einer Drehzahl der ersten Antriebseinheit und unter Berücksichtigung von zumindest der Lufttemperatur unter diesen Bedingungen durch die erste Antriebseinheit bereitstellbares erstes Drehmoment hervorgeht. Insbesondere werden die Ergebnisse beider Modelle, die voneinander unabhängig ermittelt werden, dann miteinander verarbeitet.
Bevorzugt ist in zumindest einer der Steuereinheiten zumindest ein weiteres Modell hinterlegt, aus dem in Abhängigkeit von einer Drehzahl der ersten Antriebseinheit und unter Berücksichtigung von zumindest einer Nockenwellenstellung (in deren Abhängigkeit z. B. Ventilsteuerzeiten bestimmbar sind) ein unter diesen Bedingungen durch die erste Antriebseinheit bereitstellbares erstes Drehmoment hervorgeht, wobei zur Betätigung des Getriebes zusätzlich das weitere Modell berücksichtigt wird.

Gemäß der vorliegenden Erfindung umfasst das Verfahren zumindest die folgenden Schritte:
a) Berechnen eines nach einem (ausgehend von einem Jetzt-Zustand in der Zukunft liegenden) durchzuführenden Schaltvorgang zumindest durch die erste Antriebseinheit bereitstellbaren ersten Drehmoments;
b) Betätigen des Getriebes unter Berücksichtigung des ersten Drehmoments.

Gemäß der vorliegenden Erfindung wird in Schritt a) das erste Drehmoment ausschließlich für eine nächsthöhere Getriebeübersetzung berechnet. Damit kann ein Rechenaufwand der betreffenden Steuereinheit reduziert werden. Dabei bezeichnet die nächsthöhere Getriebeübersetzung eine Übersetzung zwischen einer Antriebswelle und einer mit dieser über das Getriebe (bzw. über die Getriebeübersetzung) verbundenen Abtriebswelle, die einen kleineren Wert für das Verhältnis Drehzahl der Antriebswelle zu Drehzahl der Abtriebswelle (Drehzahl Antriebswelle / Drehzahl Abtriebswelle) aufweist als die vorliegende Übersetzung.

Insbesondere erfolgt eine Berechnung des ersten Drehmoments gemäß Schritt a) nur bei Vorliegen eines Betriebszustands, in dem mindestens 75 %, insbesondere mindestens 90 %, einer Nennleistung und/oder einer Nenndrehzahl der ersten Antriebseinheit vorliegen. Insbesondere wird in dem vorliegenden Betriebszustand die erste Antriebseinheit in Volllast betrieben, d. h. bei einer vorgegebenen Drehzahl der ersten Antriebseinheit wird ein maximal erzeugbares Drehmoment angefordert.

Nennleistung und Nenndrehzahl sind insbesondere für den Referenzzustand definiert.

Insbesondere wird weiter vorausgesetzt, dass ein im Rahmen des Verfahrens durchzuführender Schaltvorgang im Regelfall aufgrund einer Beschleunigung des Kraftfahrzeuges erforderlich ist, wobei durch den Schaltvorgang eine Drehzahl der ersten Antriebseinheit reduziert werden kann, während die Drehzahl der Räder weiter erhöht wird. Insbesondere wird Schritt a) ausschließlich in der ersten Steuereinheit durchgeführt.

Insbesondere erfolgt vor Schritt a) in einem weiteren Schritt a0) ein Feststellen eines durchzuführenden Schaltvorgangs durch die Getriebesteuereinheit in einem aktuellen Betriebszustand des Kraftfahrzeugs, wobei erst danach die Schritte a) und b) eingeleitet werden.

Insbesondere wird das Verfahren also erst dann eingeleitet (und damit Rechenkapazität der Steuereinheiten benötigt), wenn durch die Getriebesteuereinheit die Notwendigkeit eines (ausgehend von einem Jetzt-Zustand in der Zukunft liegenden) durchzuführenden Schaltvorgangs erkannt wird (z. B. bei Vorliegen eines Betriebszustands, in dem mindestens 75 %, insbesondere mindestens 90 %, einer Nennleistung und/oder einer Nenndrehzahl der ersten Antriebseinheit vorliegen). Bevorzugt wird nur dann eine Kommunikation mit der ersten Steuereinheit eingeleitet und das (prognostizierte) erste Drehmoment bestimmt und abgefragt.

Insbesondere liegt das (berechnete) erste Drehmoment bereits vor, weil z. B. die erste Steuereinheit ständig das erste Drehmoment (in Abhängigkeit von der vorliegenden Drehzahl) für ausschließlich die nächsthöhere Übersetzung bestimmt bzw. berechnet. Auch damit kann ein Rechenaufwand der Steuereinheiten und insbesondere eine Belastung der Kommunikationsstruktur zwischen den Steuereinheiten reduziert werden.

Insbesondere weist der Antriebsstrang zusätzlich eine zweite Antriebseinheit auf, wobei über die zweite Antriebseinheit zumindest zeitweise ein zweites Drehmoment bereitstellbar ist, wobei das zweite Drehmoment in Abhängigkeit von zumindest dem Luftdruck oder der Lufttemperatur (bevorzugt von beiden) bereitgestellt wird.

Insbesondere ist die zweite Antriebseinheit eine elektrische Maschine, die ein zweites Drehmoment insbesondere im Wesentlichen unabhängig von einer Umgebungstemperatur und/oder einem Umgebungsdruck erzeugen und damit bereitstellen kann. Hier wird insbesondere vorgeschlagen, dass das in Ergänzung zum ersten Drehmoment bereitgestellte zweite Drehmoment in Abhängigkeit von der Leistungsfähigkeit der ersten Antriebseinheit (nämlich in Abhängigkeit von Luftdruck und/oder Lufttemperatur) erzeugt wird.

Die zweite Antriebseinheit ermöglicht insbesondere das rein elektrische Fahren und übernimmt bevorzugt die Rekuperation, wenn die Verbrennungskraftmaschine abgeschaltet ist. Die zweite Antriebseinheit kann zum Boosten (elektrische Erhöhung des Antriebsdrehmomentes zusätzlich zum ersten Drehmoment der Verbrennungskraftmaschine) und zur Lastpunktanhebung (elektrische Erhöhung der Last der Verbrennungskraftmaschine zum Laden des Energiespeichers) genutzt werden.

Die zweite Antriebseinheit kann an der gleichen Achse wie die erste Antriebseinheit angeordnet sein, wobei ein Drehmoment der zweiten Antriebseinheit (ausschließlich) auf die Räder dieser Achse übertragbar ist (oder zusätzlich oder zumindest zeitweise und ggf. zumindest teilweise auch auf die andere Achse).

Die zweite Antriebseinheit (oder auch mehrere elektrische Maschinen) kann aber auch an einer anderen Achse als die erste Antriebseinheit, z. B. an einer Hinterachse, oder als direkter Radantrieb angeordnet sein.

Wird die zweite Antriebseinheit an einer anderen Achse, z. B. der Hinterachse angeordnet, lässt sich neben den Vorteilen des Hybridantriebs hinsichtlich der Antriebseffizienz auch ein Traktionsvorteil durch den zusätzlichen Antrieb der zweiten Achse generieren (Allradantrieb).

Insbesondere wird, wenn das zweite Drehmoment in Ergänzung zum ersten Drehmoment zur Erfüllung einer Drehmomentanforderung bereitgestellt wird und eine Reduktion des ersten Drehmoments durch den Luftdruck und die Lufttemperatur im Vergleich zu dem Referenzzustand vorliegt, das zweite Drehmoment ebenfalls reduziert.

Insbesondere soll damit einem subjektiven Empfinden eines Fahrers entsprochen werden. Insbesondere erwartet der Fahrer eine Reduktion einer Antriebsleistung des Kraftfahrzeugs (zumindest bei der Verbrennungskraftmaschine) in bestimmten Betriebszuständen, z. B. in großer Höhe oder bei hohen Lufttemperaturen.

Damit kann ein hinsichtlich des Energieverbrauchs wirtschaftlicher Betrieb des Kraftfahrzeuges realisiert werden. Insbesondere wird so vermieden, dass die zweite Antriebseinheit ein so großes zweites Drehmoment bereitstellt, dass die Reduzierung des ersten Drehmoments (infolge der veränderten klimatischen oder geographischen Bedingungen) zu jedem Zeitpunkt vollständig kompensiert wird.

Gemäß der vorliegenden Erfindung wird weiter ein Kraftfahrzeug vorgeschlagen, zumindest aufweisend einen Antriebsstrang zum Antrieb des Kraftfahrzeuges. Der Antriebsstrang weist zumindest eine Verbrennungskraftmaschine als eine erste Antriebseinheit und ein selbstschaltendes Getriebe auf, wobei die erste Antriebseinheit über eine erste Steuereinheit und das Getriebe über eine Getriebesteuereinheit gesteuert wird. Die beiden Steuereinheiten sind zur Durchführung des beschriebenen Verfahrens konfiguriert.

Vorsorglich wird darauf hingewiesen, dass die Steuereinheit(en) und die Getriebesteuereinheit miteinander kombiniert sein können und/oder in einer (einzelnen) gemeinsamen übergeordneten Kontrolleinheit integriert bzw. kombiniert sein können.

Weiter kann das Verfahren auch von einem Computer bzw. mit einem Prozessor einer Steuereinheit ausgeführt werden.

Es wird demnach auch ein System zur Datenverarbeitung vorgeschlagen, das einen Prozessor umfasst, der so angepasst/konfiguriert ist, dass er das Verfahren bzw. einen Teil der Schritte des vorgeschlagenen Verfahrens ausführt.

Es kann ein computerlesbares Speichermedium vorgesehen sein, das Befehle umfasst, die bei der Ausführung durch einen Computer/Prozessor diesen veranlassen, das Verfahren bzw. mindestens einen Teil der Schritte des vorgeschlagenen Verfahrens auszuführen.

Die Ausführungen zu dem Verfahren sind insbesondere auf das Kraftfahrzeug, das System, das Speichermedium oder das computerimplementierte Verfahren übertragbar und umgekehrt.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

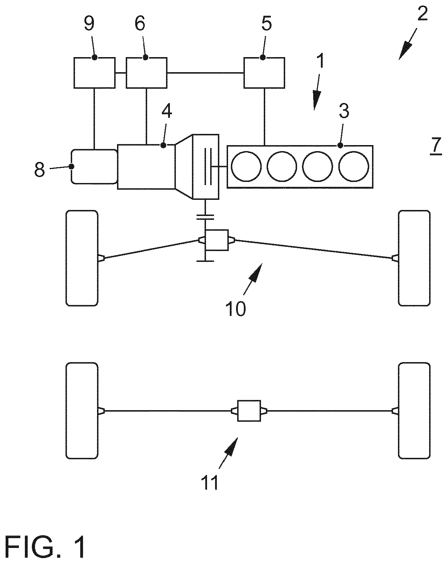

Die Erfindung sowie das technische Umfeld werden nachfolgend anhand der beiliegenden Figur näher erläutert. Es ist darauf hinzuweisen, dass die Erfindung , welche durch die nachfolgenden Ansprüche definiert wird, durch das angeführte Ausführungsbeispiel nicht beschränkt werden soll. Insbesondere ist darauf hinzuweisen, dass die Figur und insbesondere die dargestellten Größenverhältnisse nur schematisch sind. Fig. 1 zeigt ein Kraftfahrzeug 2 mit einem Antriebsstrang 1.

Das Kraftfahrzeug 2 weist eine erste Achse 10 und eine zweite Achse 11 auf. Die erste Achse 10 wird über einen Antriebsstrang 1 angetrieben. Der Antriebsstrang 1 weist eine Verbrennungskraftmaschine als eine erste Antriebseinheit 3 und ein selbstschaltendes Getriebe 4 auf, wobei die erste Antriebseinheit 3 über eine erste Steuereinheit 5 und das Getriebe 4 über eine Getriebesteuereinheit 6 gesteuert wird. Weiter ist eine zweite Antriebseinheit 8 vorgesehen, die über eine zweite Steuereinheit 9 gesteuert wird. Die Steuereinheiten 5, 6, 8 sind zur Durchführung des beschriebenen Verfahrens konfiguriert.

### Bezugszeichenliste

- 1: Antriebsstrang
- 2: Kraftfahrzeug
- 3: erste Antriebseinheit
- 4: Getriebe
- 5: erste Steuereinheit
- 6: Getriebesteuereinheit
- 7: Umgebung
- 8: zweite Antriebseinheit
- 9: zweite Steuereinheit
- 10: erste Achse
- 11: zweite Achse

## Patentansprüche

1. Verfahren zum Betrieb eines Antriebsstrangs (1) in einem Kraftfahrzeug (2), wobei der Antriebsstrang (1) zumindest eine Verbrennungskraftmaschine als eine erste Antriebseinheit (3) und ein selbstschaltendes Getriebe (4) aufweist, wobei die erste Antriebseinheit (3) über eine erste Steuereinheit (5) und das Getriebe (4) über eine Getriebesteuereinheit (6) gesteuert wird; wobei das Getriebe (4) in Abhängigkeit von zumindest einer Drehzahl der ersten Antriebseinheit (3) und einem von der ersten Antriebseinheit (3) bereitstellbaren ersten Drehmoment betätigt wird; wobei das Getriebe (4) zusätzlich in Abhängigkeit von einem in einer Umgebung (7) des Kraftfahrzeugs (2) vorliegendem Luftdruck und einer in der Umgebung (7) vorliegenden Lufttemperatur betätigt wird, wenn diese Parameter von einem Referenzzustand für den Luftdruck und die Lufttemperatur abweichen; wobei das Verfahren zumindest die folgenden Schritte umfasst:
a) Berechnen eines nach einem durchzuführenden Schaltvorgang zumindest durch die erste Antriebseinheit (3) bereitstellbaren ersten Drehmoments;
b) Betätigen des Getriebes (4) unter Berücksichtigung des bereitstellbaren ersten Drehmoments;
**dadurch gekennzeichnet, dass** in Schritt a) das erste Drehmoment ausschließlich für eine nächsthöhere Getriebeübersetzung berechnet wird.

2. Verfahren nach Patentanspruch 1, wobei in zumindest einer der Steuereinheiten (5, 6) mindestens ein Modell hinterlegt ist, aus dem in Abhängigkeit von einer Drehzahl der ersten Antriebseinheit (3) und unter Berücksichtigung von zumindest dem Luftdruck oder der Lufttemperatur ein unter diesen Bedingungen durch die erste Antriebseinheit (3) bereitstellbares erstes Drehmoment hervorgeht; wobei zur Betätigung des Getriebes (4) das mindestens eine Modell berücksichtigt wird.

3. Verfahren nach Patentanspruch 2, wobei zumindest zwei Modelle hinterlegt sind, wobei aus dem einen Modell ein in Abhängigkeit von einer Drehzahl der ersten Antriebseinheit (3) und unter Berücksichtigung von zumindest dem Luftdruck unter diesen Bedingungen durch die erste Antriebseinheit (3) bereitstellbares erstes Drehmoment hervorgeht und aus dem anderen Modell ein in Abhängigkeit von einer Drehzahl der ersten Antriebseinheit (3) und unter Berücksichtigung von zumindest der Lufttemperatur unter diesen Bedingungen durch die erste Antriebseinheit (3) bereitstellbares erstes Drehmoment hervorgeht.

4. Verfahren nach einem der vorhergehenden Patentansprüche 2 und 3, wobei in zumindest einer der Steuereinheiten (5, 6) zumindest ein weiteres Modell hinterlegt ist, aus dem in Abhängigkeit von einer Drehzahl der ersten Antriebseinheit (3) und unter Berücksichtigung von zumindest einer Nockenwellenstellung ein unter diesen Bedingungen durch die erste Antriebseinheit (3) bereitstellbares erstes Drehmoment hervorgeht, wobei zur Betätigung des Getriebes (4) zusätzlich das weitere Modell berücksichtigt wird.

5. Verfahren nach einem der vorhergehenden Patentansprüche, wobei Schritt a) ausschließlich in der ersten Steuereinheit (5) durchgeführt wird.

6. Verfahren nach einem der vorhergehenden Patentansprüche, wobei vor Schritt a) in einem weiteren Schritt a0) ein Feststellen eines durchzuführenden Schaltvorgangs durch die Getriebesteuereinheit (6) in einem aktuellen Betriebszustand des Kraftfahrzeugs (2) erfolgt und erst danach die Schritte a) und b) eingeleitet werden.

7. Verfahren nach einem der vorhergehenden Patentansprüche, wobei der Antriebsstrang (1) zusätzlich eine zweite Antriebseinheit (8) aufweist, wobei über die zweite Antriebseinheit (8) zumindest zeitweise ein zweites Drehmoment bereitstellbar ist, wobei das zweite Drehmoment in Abhängigkeit von zumindest dem Luftdruck oder der Lufttemperatur bereitgestellt wird.

8. Verfahren nach Patentanspruch 7, wobei, wenn das zweite Drehmoment in Ergänzung zum ersten Drehmoment zur Erfüllung einer Drehmomentanforderung bereitgestellt wird und eine Reduktion des ersten Drehmoments durch den Luftdruck und die Lufttemperatur im Vergleich zu dem Referenzzustand vorliegt, das zweite Drehmoment ebenfalls reduziert wird.

9. Kraftfahrzeug (2), zumindest aufweisend einen Antriebsstrang (1) zum Antrieb des Kraftfahrzeuges (2), wobei der Antriebsstrang zumindest eine Verbrennungskraftmaschine als eine erste Antriebseinheit (3) und ein selbstschaltendes Getriebe (4) aufweist, wobei die erste Antriebseinheit (3) über eine erste Steuereinheit (5) und das Getriebe (4) über eine Getriebesteuereinheit (6) gesteuert wird, wobei beide Steuereinheiten (5, 6) zur Durchführung des Verfahrens nach einem der vorhergehenden Patentansprüche konfiguriert sind.

## Claims

1. Method for operating a drive train (1) in a motor vehicle (2), the drive train (1) having at least one internal combustion engine, as a first drive unit (3), and an automatically shifting transmission (4), the first drive unit (3) being controlled via a first control unit (5), and the transmission (4) being controlled via a transmission control unit (6); the transmission (4) being actuated in a manner which is dependent on at least one rotational speed of the first drive unit (3) and a first torque which can be provided by the first drive unit (3); the transmission (4) being actuated additionally in a manner which is dependent on an air pressure which prevails in a surrounding area (7) of the motor vehicle (2) and an air temperature which prevails in the surrounding area (7) if these parameters differ from a reference state for the air pressure and the air temperature; the method comprising at least the following steps:
a) calculating of a first torque which can be provided at least by way of the first drive unit (3) after a shifting operation which is to be carried out;
b) actuating of the transmission (4) with consideration of the first torque which can be provided;
**characterized in that**, in step a), the first torque is calculated exclusively for the next transmission ratio up.

2. Method according to Patent Claim 1, at least one model being stored in at least one of the control units (5, 6), from which model, in a manner which is dependent on a rotational speed of the first drive unit (3) and with consideration of at least the air pressure or the air temperature, a first torque which can be provided by way of the first drive unit (3) under these conditions is apparent; the at least one model being taken into consideration for the actuation of the transmission (4).

3. Method according to Patent Claim 2, at least two models being stored, a first torque which can be provided by way of the first drive unit (3) under these conditions in a manner which is dependent on a rotational speed of the first drive unit (3) and with consideration of at least the air pressure being apparent from the one model, and a first torque which can be provided by way of the first drive unit (3) under these conditions in a manner which is dependent on a rotational speed of the first drive unit (3) and with consideration of at least the air temperature being apparent from the other model.

4. Method according to either of the preceding Patent Claims 2 and 3, at least one further model being stored in at least one of the control units (5, 6), from which further model, in a manner which is dependent on a rotational speed of the first drive unit (3) and with consideration of at least one camshaft position, a first torque which can be provided by way of the first drive unit (3) under these conditions is apparent, the further model additionally being taken into consideration for the actuation of the transmission (4).

5. Method according to one of the preceding patent claims, step a) being carried out exclusively in the first control unit (5).

6. Method according to one of the preceding patent claims, a determination of a shifting operation to be carried out by way of the transmission control unit (6) in a current operating state of the motor vehicle (2) taking place before step a) in a further step a0), and steps a) and b) being initiated only afterwards.

7. Method according to one of the preceding patent claims, the drive train (1) additionally having a second drive unit (8), it being possible for a second torque to be provided at least temporarily via the second drive unit (8), the second torque being provided in a manner which is dependent on at least the air pressure or the air temperature.

8. Method according to Patent Claim 7, the second torque likewise being reduced if the second torque is provided in addition to the first torque in order to fulfil a torque request and there is a reduction in the first torque as a result of the air pressure and the air temperature in comparison with the reference state.

9. Motor vehicle (2), at least having a drive train (1) for driving the motor vehicle (2), the drive train having at least one internal combustion engine, as a first drive unit (3), and an automatically shifting transmission (4), the first drive unit (3) being controlled via a first control unit (5), and the transmission (4) being controlled via a transmission control unit (6), the two control units (5, 6) being configured to carry out the method according to one of the preceding patent claims.

## Revendications

1. Procédé permettant de faire fonctionner une chaîne cinématique (1) dans un véhicule automobile (2), la chaîne cinématique (1) présentant au moins un moteur à combustion interne en tant que première unité d'entraînement (3) et une boîte de vitesses automatique (4), la première unité d'entraînement (3) étant commandée par l'intermédiaire d'une première unité de commande (5) et la boîte de vitesses (4) étant commandée par l'intermédiaire d'une unité de commande de boîte de vitesses (6) ; la boîte de vitesses (4) étant actionnée en fonction d'au moins une vitesse de rotation de la première unité d'entraînement (3) et d'un premier couple pouvant être fourni par la première unité d'entraînement (3) ; la boîte de vitesses (4) étant en outre actionnée en fonction d'une pression atmosphérique régnant dans un environnement (7) du véhicule automobile (2) et d'une température de l'air régnant dans l'environnement (7) si ces paramètres s'écartent d'un état de référence pour la pression atmosphérique et la température de l'air ; le procédé comprenant au moins les étapes suivantes consistant à :
a) calculer un premier couple pouvant être fourni au moins par la première unité d'entraînement (3) après un changement de vitesse à exécuter ;
b) actionner la boîte de vitesses (4) en tenant compte du premier couple pouvant être fourni ;
**caractérisé en ce qu'**à l'étape a), le premier couple est calculé exclusivement pour un rapport de transmission immédiatement supérieur.

2. Procédé selon la revendication 1, dans lequel, dans au moins l'une des unités de commande (5, 6), au moins un modèle est stocké duquel ressort un premier couple pouvant être fourni par la première unité d'entraînement (3) sous ces conditions en fonction d'une vitesse de rotation de la première unité d'entraînement (3) et en tenant compte au moins de la pression atmosphérique ou de la température de l'air ; ledit au moins un modèle étant pris en compte pour l'actionnement de la boîte de vitesses (4).

3. Procédé selon la revendication 2, dans lequel au moins deux modèles sont stockés, dans lequel dudit un modèle ressort un premier couple pouvant être fourni par la première unité d'entraînement (3) sous ces conditions en fonction d'une vitesse de rotation de la première unité d'entraînement (3) et en tenant compte au moins de la pression atmosphérique, et de l'autre modèle ressort un premier couple pouvant être fourni par la première unité d'entraînement (3) sous ces conditions en fonction d'une vitesse de rotation de la première unité d'entraînement (3) et en tenant compte au moins de la température de l'air.

4. Procédé selon l'une quelconque des revendications précédentes 2 et 3, dans lequel dans au moins l'une des unités de commande (5, 6), au moins un autre modèle est stocké duquel ressort un premier couple pouvant être fourni par la première unité d'entraînement (3) dans ces conditions en fonction d'une vitesse de rotation de la première unité d'entraînement (3) et en tenant compte au moins d'une position d'arbre à cames, l'autre modèle étant pris en compte en plus pour l'actionnement de la boîte de vitesses (4).

5. Procédé selon l'une quelconque des revendications précédentes, dans lequel l'étape a) n'est exécutée que dans la première unité de commande (5).

6. Procédé selon l'une quelconque des revendications précédentes, dans lequel avant l'étape a), dans une autre étape a0), une constatation d'un changement de vitesse à exécuter par l'unité de commande de boîte de vitesses (6) dans un état de fonctionnement actuel du véhicule automobile (2) est effectuée, et les étapes a) et b) ne sont déclenchées qu'ultérieurement.

7. Procédé selon l'une quelconque des revendications précédentes, dans lequel la chaîne cinématique (1) présente en outre une deuxième unité d'entraînement (8), la deuxième unité d'entraînement (8) pouvant fournir au moins temporairement un deuxième couple, le deuxième couple étant fourni en fonction au moins de la pression atmosphérique ou de la température de l'air.

8. Procédé selon la revendication 7, dans lequel, lorsque le deuxième couple est fourni en complément du premier couple pour satisfaire une demande de couple, et une réduction du premier couple due à la pression atmosphérique et à la température de l'air est présente en comparaison avec l'état de référence, le deuxième couple est réduit également.

9. Véhicule automobile (2), présentant au moins une chaîne cinématique (1) pour entraîner le véhicule automobile (2), la chaîne cinématique présentant au moins un moteur à combustion interne en tant que première unité d'entraînement (3) et une boîte de vitesses automatique (4), la première unité d'entraînement (3) étant commandée par l'intermédiaire d'une première unité de commande (5) et la boîte de vitesses (4) étant commandée par l'intermédiaire d'une unité de commande de boîte de vitesses (6), les deux unités de commande (5, 6) étant configurées pour exécuter le procédé selon l'une quelconque des revendications précédentes.
